# EUROPÄISCHE PATENTSCHRIFT

(11) **EP 1 530 696 B1**
(45) Veröffentlichungstag und Bekanntmachung des Hinweises auf die Patenterteilung: **19.12.2007**
(21) Anmeldenummer: 03740442.3
(22) Anmeldetag: 09.07.2003
(51) Int. Cl.: F16L 25/00

(54) **ANSCHLUSSSTÜCK FÜR EINE FLUIDLEITUNG**
CONNECTION PIECE FOR A FLUID LINE
RACCORD DESTINE A UNE CONDUITE FLUIDIQUE

(30) Priorität: 20.08.2002 DE 10237976
(43) Veröffentlichungstag der Anmeldung: 18.05.2005
(73) Patentinhaber: Festo AG & Co., 73734 Esslingen (DE)
(72) Erfinder: CLAUS, Hans-Jürgen, 70199 Stuttgart (DE); ZOLLER, Klaus, 70186 Stuttgart (DE); BRENNER, Hans-Walter, 70565 Stuttgart (DE); KERSCHER, Wolf-Dieter, 73230 Kirchheim (DE)
(74) Vertreter: Abel, Martin
(86) Internationale Anmeldenummer: PCT/EP2003/007364
(87) Internationale Veröffentlichungsnummer: WO 2004/018922

(56) Entgegenhaltungen:
- WO-A-02/37012
- DE-U- 20 119 352
- US-A- 4 675 780

## Beschreibung

Die Erfindung betrifft ein Anschlussstück für eine einen Fluidkanal enthaltende Fluidleitung, in deren Wandung mindestens ein zur Übertragung elektrischer Signale vorgesehener strangförmiger Signalleiter verläuft, mit einer eine Einstecköffnung aufweisenden Steckaufnahme zum Einstecken der Fluidleitung, mit einer Haltevorrichtung zum Halten der eingesteckten Fluidleitung und mit mindestens einem in der Steckaufnahme angeordneten und in Richtung der Einstecköffnung ragenden Signalkontakt, der beim Einstecken der Fluidleitung unter Herstellung einer elektrischen Verbindung mit einer Eindringpartie stirnseitig in einen Signalleiter eindringt.

Ein aus der DE 20119352 U1 bekanntes Anschlussstück dieser Art verfügt über zwei stiftförmige Signalkontakte, die beim Einstecken einer Fluidleitung in die Stirnseite des jeweils zugeordneten Signalleiters zentral einstechen. Damit hierbei stets eine sichere elektrische Verbindung hergestellt wird, muss die Fluidleitung beim Einstecken drehwinkelmäßig sehr exakt positioniert werden. Unterstützt wird dies durch eine die Winkellage der Fluidleitung vorgebende Führungseinrichtung, deren Wirksamkeit jedoch eine sehr präzise Herstellung mit engen Fertigungstoleranzen voraussetzt. Dies geht zu Lasten der Herstellkosten.

Es ist die Aufgabe der vorliegenden Erfindung, ein Anschlussstück der eingangs genannten Art zu schaffen, das auch bei größeren Fertigungstoleranzen und daher kostengünstigerer Herstellung eine sichere elektrische Kontaktierung gewährleistet.

Zur Lösung dieser Aufgabe ist vorgesehen, dass die Eindringpartie des mindestens einen Signalkontakts von einer messerartigen Schneide gebildet ist, deren Breite mindestens dem Durchmesser des zu kontaktierenden Signalleiters entspricht und die den Signalleiter beim stirnseitigen Eindringen in einen außen und einen innen liegenden Leiterzweig aufspaltet.

Auf diese Weise erfolgt das elektrische Kontaktieren der Signalkontakte und der Signalleiter beim Einstecken der Fluidleitung mit wesentlich höherer Treffsicherheit. Selbst wenn das Anschlussstück über keine besonderen Führungsmittel zur Vorgabe der winkelmäßigen Ausrichtung der Fluidleitung verfügt und das Einstecken der Fluidleitung mit bloßem Augenmaß oder auf Basis einer an der Fluidleitung vorgesehenen Markierung erfolgt, kann eine sichere elektrische Verbindung garantiert werden. Je größer man die Breite der messerartigen Schneide wählt, desto höher ist die Kontaktierungssicherheit und desto größer können die Fertigungstoleranzen bemessen werden. Bei alledem sorgt die Ausgestaltung der Eindringpartie als messerartige Schneide für eine große Kontaktfläche, da die durch das Spalten des strangförmigen Signalleiters entstandenen Leiterzweige großflächig am Signalkontakt anliegen können.

Vorteilhafte Weiterbildungen der Erfindung gehen aus den Unteransprüchen hervor.

Insbesondere wenn die messerartige Schneide dem Durchmesser des zu kontaktierenden Signalleiters entspricht oder nur geringfügig größer ist, kann die messerartige Schneide, in Stirnansicht gesehen, geradlinig ausgebildet sein. Sie erstreckt sich in diesem Fall zweckmäßigerweise parallel zu einer Tangente an den Umfang der Steckaufnahme. Soll hingegen eine größere Breite der messerartigen Schneide vorgesehen werden, empfiehlt sich, in der Stirnansicht gesehen, eine bogenförmig gekrümmte Schneidenform. Die Schneide kann dann ohne weiteres entlang einer größeren Strecke dem Umfang der Steckaufnahme folgen. Ist das Anschlussstück mit zwei Signalkontakten ausgebildet, die einander diametral gegenüberliegen, können deren Schneiden sich jeweils über einen Winkel von bis annähernd 180° erstrecken, vorzugsweise im Bereich von 150°.

Wenn die messerartige Schneide an ihrer Außenseite eine zur Schneidkante hin schräg nach innen verlaufende Schneidenflanke aufweist, wird die vorzugsweise aus flexiblem Kunststoffmaterial bestehende Fluidleitung nach dem Eindringen der Schneide aufgeweitet, so dass ein Kontaktdruck zwischen der Schneide und dem außen liegenden Leiterzweig entsteht.

Die messerartige Schneide kann, bei radialer Blickrichtung betrachtet, einen zur Längsachse der Steckaufnahme rechtwinkeligen, geradlinigen Verlauf haben. Dabei muss allerdings unter Umständen eine relativ hohe Einsteckkraft auf die Fluidleitung ausgeübt werden, um das gewünschte Eindringen der Schneide in die Wandung der Fluidleitung und den strangförmigen Signalleiter hervorzurufen. Insbesondere wenn das Material der Fluidleitung eine höhere Festigkeit hat, empfiehlt sich daher die Ausgestaltung der messerartigen Schneide derart, dass sie, bei radialer Blickrichtung, einen konkav gekrümmten und/oder V-förmig eingebuchteten Verlauf hat. Letzteres ist vor allem dann von Vorteil, wenn sich der zu kontaktierende elektrische Signalleiter zumindest teilweise in einem gegenüber in Umfangsrichtung benachbarten Wandbereichen nach radial innen vorstehenden rippenartigen Wandabschnitt der Fluidleitung erstreckt. Die Schneide dringt hier beim Einstecken der Fluidleitung nicht frontal, sondern von der Seite her allmählich in die Wandung des rippenartigen Wandabschnittes ein, so dass für das Einschneiden weniger Kraft aufgebracht werden muss.

Das Anschlussstück kann bei Bedarf mit Führungsmitteln aus-Das Anschlussstück kann bei Bedarf mit Führungsmitteln ausgestattet sein, die ein drehwinkelorientiertes Einstecken der Fluidleitung unterstützen. Zur Realisierung dieser Führungsmittel kann mindestens ein Signalkontakt zwei auf einander entgegengesetzten Seiten in Richtung zur Einstecköffnung über die messerartige Schneide vorstehende Führungsflügel aufweisen, die einen sich zur Einstecköffnung hin verbreiternden Führungsspalt definieren. Die Fluidleitung wird dann so angesetzt, dass ihr gegebenenfalls vorhandener rippenartiger Wandabschnitt in dem Führungsspalt zu liegen kommt und mit zunehmender Einstecktiefe durch den Führungsspalt bis zum Erreichen der gewünschten Drehwihkelorientierung zentriert wird.

Eine weitere vorteilhafte Bauform sieht vor, dass dem mindestens einen Signalkontakt mindestens ein benachbart zu der messerartigen Schneide angeordneter Abstützflügel zugeordnet ist, der im eingesteckten Zustand der Fluidleitung den radial nach innen gedrückten Leiterzweig abstützend untergreift und gegen den Signalkontakt drückt. Sind wenigstens zwei solcher Abstützflügel vorhanden, die in Stirnansicht gesehen eine V-artige Konfiguration mit dem Signalleiter zugewandter V-Öffnung einnehmen, kann gleichzeitig eine Führung realisiert werden, die wiederum ein drehwinkelorientiertes Einstecken der Fluidleitung begünstigt.

Bei einer weiteren vorteilhaften Ausführung ist der mindestens eine Signalkontakt in Richtung der Längsachse der Signalaufnahme verschiebbar gelagert, wobei er mit in Richtung der Einstecköffnung wirksamen Federmitteln kooperiert. Auf diese Weise kann der Signalkontakt bei eingesteckter Fluidleitung ohne weiteres geringfügigen Längsbewegungen der Fluidleitung im Anschlussstück folgen. Dabei wird er durch die Federmittel unterstützt, die ihn in Richtung zu der Fluidleitung beaufschlagen. Auf diese Weise wird unerwünschten Relativbewegungen zwischen dem Signalleiter und dem Signalkontakt entgegengewirkt, die sich nachteilig auf die Qualität der elektrischen Verbindung auswirken könnten.

Nachfolgend wird die Erfindung anhand der beiliegenden Zeichnung näher erläutert. In dieser zeigen:
- Figur 1: eine erste Ausführungsform des erfindungsgemäßen Anschlussstückes im Längsschnitt, wobei eine angeschlossene Fluidleitung teilweise aufgebrochen dargestellt ist und wobei eine mit dem Anschlussstück ausgestattete Komponente schematisch strichpunktiert dargestellt ist,
- Figur 2: einen Querschnitt gemäß Schnittlinie II-II durch die in Figur 1 gezeigt Anordnung, wobei lediglich die Fluidleitung und .zwei Signalkontakte abgebildet sind,
- Figur 3: die bei dem Anschlussstück der Figuren 1 und 2 zur Anwendung kommende Signalkontaktanordnung und eine anzuschließende Fluidleitung in gesonderter Darstellung,
- Figur 4: eine weitere Ausführungsform des erfindungsgemäßen Anschlussstückes in einer der Figur 1 entsprechenden Darstellungsweise,
- Figur 5: einen teilweisen Längsschnitt durch die Anordnung aus Figur 4, die mit radialer Blickrichtung eine Ansicht eines Signalkontaktes und der an diesem vorgesehenen messerartigen Schneide ermöglicht,
- Figur 6: eine Einzeldarstellung der Signalkontaktanordnung des Anschlussstückes gemäß Figur 4 in Verbindung mit dem separat abgebildeten Endabschnitt der anzuschließenden Fluidleitung,
- Figur: 7 die gesondert abgebildete Signalkontaktanordnung eines weiteren Ausführungsbeispiels des erfindungsgemäßen Anschlussstückes, zusammen mit dem Endabschnitt einer anzuschließenden Fluidleitung und
- Figur 8: einen Querschnitt durch die Anordnung aus Figur 7 im Bereich der Signalkontakte im Zustand der angeschlossenen Fluidleitung.

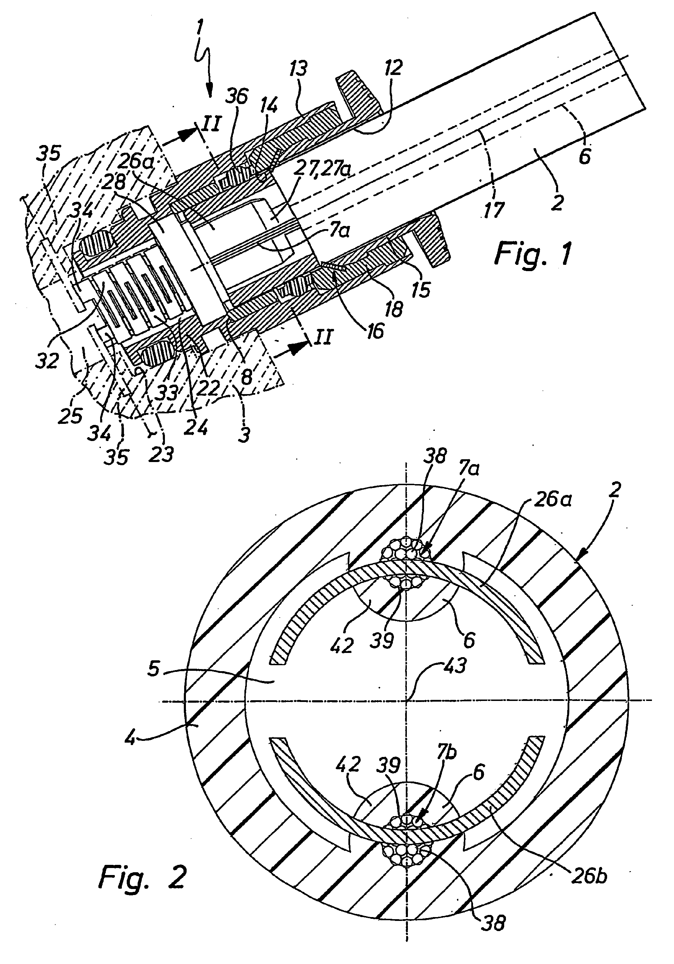

Die Figur 1 zeigt ein Anschlussstück 1, mit dem sich eine Fluidleitung 2 an eine fluidtechnische Komponente 3 anschließen lässt. Die fluidtechnische Komponente 3 ist beispielsweise ein Ventil oder ein durch Fluidkraft betätigbarer Antrieb.

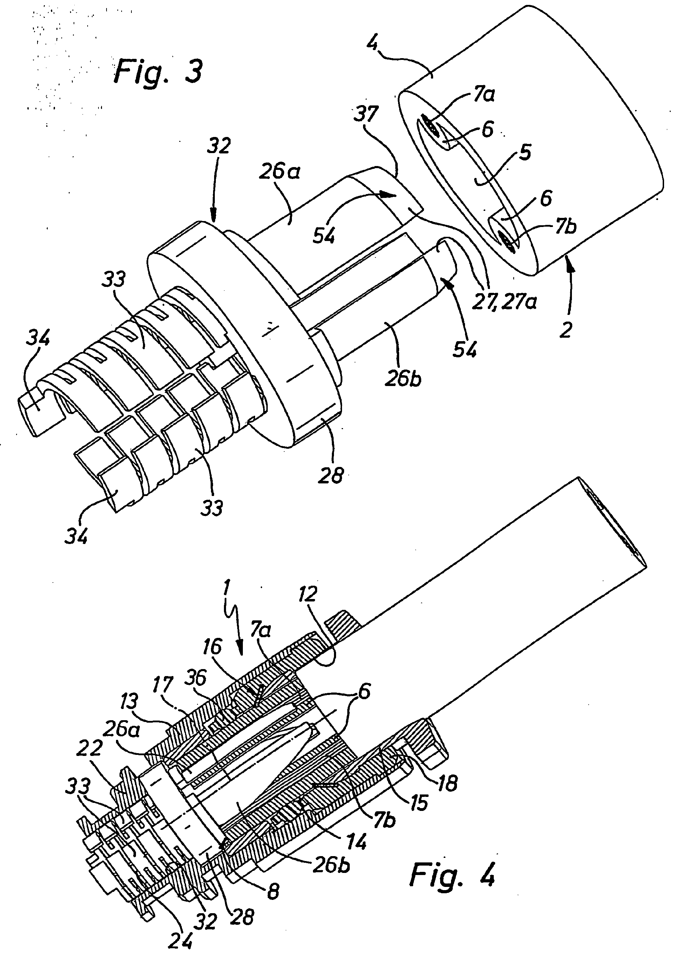

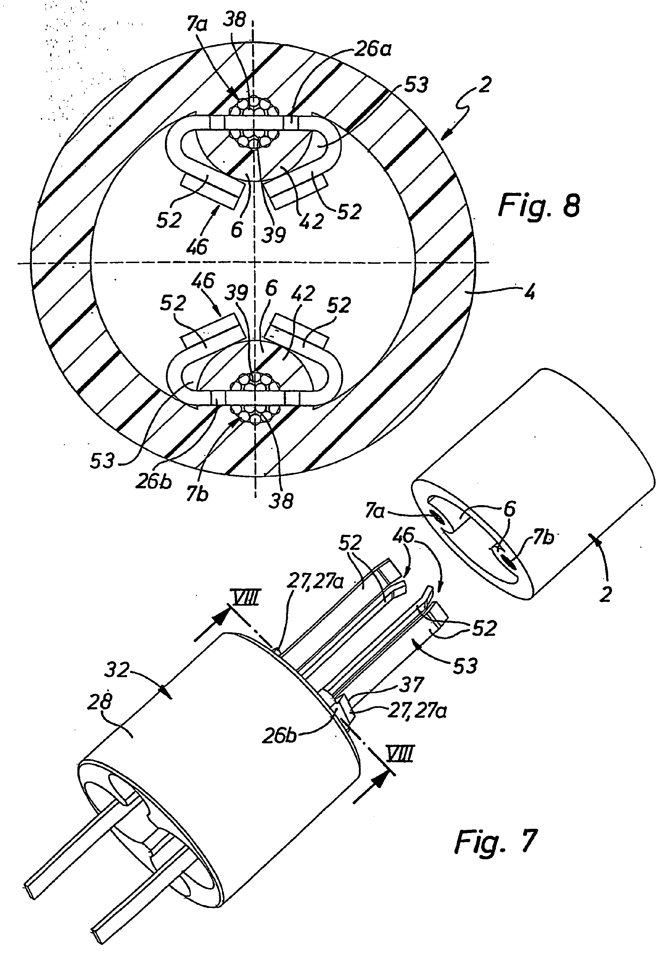

Eine alternative Bauform des Anschlussstückes 1 geht aus Figur 4 hervor. Die Figuren 7 und 8 zeigen Komponenten einer in ihrer Gesamtheit nicht dargestellten dritten Ausführungsform eines Anschlussstückes 1. Die nachstehenden Ausführungen gelten, soweit nichts Gegenteiliges vermerkt wird, für alle Ausführungsbeispiele.

Die durch das Anschlussstück 1 anschließbare Fluidleitung 2 ist von einem Schlauch gebildet und besteht aus flexiblem, vorzugsweise gummielastischem Material. Zweckmäßigerweise handelt es sich um ein Elastomer-Material.

Die Fluidleitung 2 hat eine Wandung 4, die mindestens einen Fluidkanal 5 umschließt. Beim Ausführungsbeispiel verfügt die Wandung 4 außen über eine kreisrunde Kontur. Die Innenkontur ist, abgesehen von zwei sich diametral gegenüberliegenden Vorsprüngen, ebenfalls kreisrund. Die erwähnten Vorsprünge resultieren aus je einem rippenartigen Wandabschnitt 6 der Wandung 4, der gegenüber den in Umfangsrichtung benachbarten Wandbereichen nach radial innen vorsteht.

In der Wandung 4 sind mindestens ein und vorzugsweise mehrere strangförmige Signalleiter 7a, 7b angeordnet. Sie bestehen aus elektrisch leitendem Material, beispielsweise aus Kupfer, und setzen sich zweckmäßigerweise jeweils aus mehreren Litzen zusammen. Die Signalleiter 7a, 7b erstrecken sich in der Längsrichtung der Fluidleitung 2 entlang deren gesamter Länge.

Beim Ausführungsbeispiel sind die Signalleiter 7a, 7b im Bereich der Vorsprünge 6 in die Wandung 4 integriert. Mit dem größten Teil ihres Querschnittes verlaufen sie jeweils innerhalb eines der rippenartigen Wandabschnitte 6. Mit Hilfe dieser rippenartigen Wandabschnitte 6 ist unter anderem ein einfaches Verbinden mit dem Anschlussstück 1 unter Gewährleistung einer vorbestimmten drehwinkelmäßigen Ausrichtung möglich.

Die Fluidleitung 2 ist an beliebiger Stelle durch einfaches Abschneiden ablängbar. Die Signalleiter 7a, 7b schließen dann etwa bündig mit der im Wesentlichen planen Stirnfläche der Fluidleitung 2 ab.

Zum Anschließen an dem Anschlussstück 1 wird die Fluidleitung 2 durch eine Einstecköffnung 12 hindurch in eine vom Gehäuse 13 des Anschlussstückes 1 definierte Steckaufnahme 14 eingeschoben. Dabei durchgreift die Fluidleitung 2 einen im Bereich der Einstecköffnung 12 platzierten Lösering 15, der zum bedarfsgemäßen Lösen einer Haltevorrichtung 16 dient.

Die gehäusefest fixierte Haltevorrichtung 16 enthält umfangsseitig in die Steckaufnahme 16 ragende, elastisch biegbare Zähne oder Klauen, die bezüglich der Längsachse 17 der Steckaufnahme 14 geneigt sind und die an einem im Gehäuse 13 befestigten Haltering 18 gelagert sind. Beim Einstecken der Fluidleitung 2 werden die Zähne oder Klauen nach radial außen verdrängt und gelangen am Außenumfang der Fluidleitung 2 zu liegen. Dadurch wirken sie jedweden Kräften, die die Fluidleitung 2 aus der Steckaufnahme 14 herauszubewegen versuchen, entgegen.

Durch die Haltevorrichtung 16 wird die Fluidleitung 2 lösbar fixiert. Der Lösering 15 kann durch manuelles Betätigen axial ins Innere der Steckaufnahme 14 verlagert werden, so dass er die Zähne oder Klauen der Haltevorrichtung 16 vom Außenumfang der Fluidleitung 2 abhebt und diese folglich wieder herausgezogen werden kann.

An dem der Einstecköffnung 12 entgegengesetzten rückwärtigen Endbereich ist das Gehäuse 13 des Anschlussstückes 1 mit einem Befestigungsabschnitt-22 versehen, mit dem das Anschlussstück 1 in einer Aufnahme 23 der fluidtechnischen Komponente 3 unter Abdichtung befestigt oder festlegbar ist. Durch den Befestigungsabschnitt 22 hindurch verläuft ein Fluidkanal 24, der einenends mit der Steckaufnahme 14 kommuniziert und andernends rückseitig an dem Befestigungsabschnitt 22, ausmündet. Dieser Fluidkanal 24 kommuniziert im an der fluidtechnischen Komponente 3 fixierten Zustand mit einem in dieser Komponente 3 verlaufenden weiteren Fluidkanal 25, sodass insgesamt eine fluidische Verbindung zwischen diesem weiteren Fluidkanal 25 und dem Fluidkanal 5 der eingesteckten Fluidleitung 2 hergestellt ist.

Abweichend von der gezeigten Ausführungsform kann das Anschlussstück 1 auch ein integraler Bestandteil der fluidtechnischen Komponente 3 sein. Insbesondere das Gehäuse 13 kann ein einstückiger Bestandteil eines Teils der fluidtechnischen Komponente 3 sein.

In der Steckaufnahme 14 ist eine der Anzahl der Signalleiter 7a, 7b entsprechende Anzahl von Signalkontakten 26a, 26b angeordnet. Sie sind am Grund der 14 gehäusefest fixiert und ragen von dort axial in Richtung zur Einstecköffnung 12. An der der Einstecköffnung 12 zugewandten Seite ist jeder Signalkontakt 26a, 26b mit einer Eindringpartie 27 versehen, die beim Einstecken der..Fluidleitung 2 stirnseitig in den axial gegenüberliegenden Signalleiter 7a, 7b eindringt und mit diesem eine elektrische Verbindung herstellt. Das. Anschlussstück 1 kann mit lediglich einem Signalkontakt oder mit mehreren Signalkontakten ausgestattet sein.

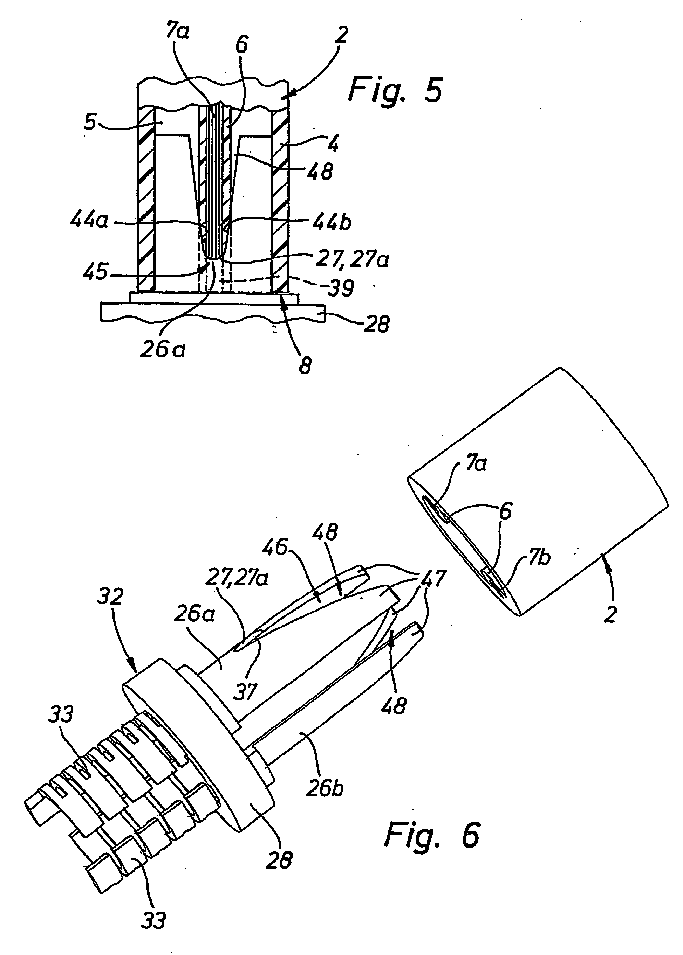

Beim Ausführungsbeispiel sind die Signalkontakte 26a, 26b an einem ringförmigen Kontraktträger 28 fixiert, zusammen mit dem sie einen in Figuren 3, 6 und 7 separat abgebildeten Einsatz 32 bilden. Dieser Einsatz ist so im Gehäuse 13 platziert, dass der Kontaktträger 28 am Grund der Steckaufnahme 14 zu liegen kommt.

Zweckmäßigerweise sind die Signalkontakte 26a, 26b in der Richtung der Längsachse 17 der Steckaufnahme 14 relativ zum Gehäuse 13 verschiebbar gelagert. Die Verschiebbarkeit ist beim Ausführungsbeispiel relativ zu dem im Gehäuse 13 ortsfest fixierten Kontaktträger 28 gegeben. Allerdings wäre auch eine Bauform denkbar, bei der die Signalkontakte 26a, 26b zusammen mit dem Kontaktträger 28 relativ zum Gehäuse 13 verschiebbar gelagert sind.

Im Zusammenhang mit der verschiebbaren Lagerung kooperieren die Signalkontakte 26a, 26b mit in Richtung der Einstecköffnung 12 wirksamen Federmitteln 33. Zweckmäßigerweise sind jedem Signalkontakt 26a, 26b individuelle Federmittel 33 zugeordnet. Beim Ausführungsbeispiel werden die Federmittel 33 jeweils von einstückig mit dem jeweiligen Signalkontakt 26a, 26b ausgebildeten axialen Fortsätzen repräsentiert, die sich an der der Eindringpartie entgegengesetzten Rückseite an die Signalkontakte 26a, 26b anschließen. Diese Fortsätze sind konstruktiv so gestaltet, dass in ihrer Längsrichtung eine federelastische Kompressibilität gegeben ist. Beim Ausführungsbeispiel wird dies durch eine mäanderförmige Formgebung der Vorsprünge realisiert.

Beim Einstecken einer Fluidleitung 2 werden die Federmittel 33 komprimiert, weil eine Drückkraft auf die Signalkontakte 26a, 26b ausgeübt wird. Wenn im anschließenden Betrieb des Anschlussstückes 1 axiale Relativbewegungen zwischen der Fluidleitung 2 und dem Gehäuse 13 auftreten, beispielsweise durch eine pulsierende Druckbeaufschlagung, werden die in die Signalleiter 7a, 7b eingedrungenen Signalkontakte 26a, 26b durch die Federkraft der Federmittel stets nachgeführt, sodass Relativbewegungen und daraus resultierende Kontaktierungsprobleme vermieden werden.

Die den Signalkontakten 26a, 26b entgegengesetzten Enden 34 der Federmittel 33 ragen ein Stück weit rückseitig über den Befestigungsabschnitt 22 hinaus. Sie sind dort mit strichpunktiert angedeuteten elektrischen Verbindungsleitungen 35 kontaktiert oder kontaktierbar, die zu einer Funktionskomponente der fluidtechnischen Komponente 3 führen, beispielsweise zu einem Sensor, zu einem Ventilantrieb oder zu einer elektronischen Steuerung.

Da beim Ausführungsbeispiel die Federmittel 33 elektrisch leitend ausgebildet sind und jeweils mit einem der Signalkontakte 26a, 26b in Verbindung stehen, ergibt sich somit eine durchgehende elektrische Verbindung zwischen den Signalleitern 7a, 7b der Fluidleitung 2 und den Verbindungsleitungen 35 der fluidtechnischen Komponente 3.

Allerdings besteht ohne weiteres die Möglichkeit, die elektrische Verbindung zwischen den Signalkontakten 26a, 26b und den Verbindungsleitungen 35 direkt oder über sonstige elektrische Leiter zu realisieren.

Jedenfalls ermöglicht das Anschlussstück 1 in der geschilderten Weise ein kombiniertes elektrisches und fluidisches Anschließen einer mit elektrischen Signalleitern 7a, 7b ausgestatteten Fluidleitung 2. Für die erforderliche Abdichtung sorgt hierbei ein Dichtungsring 36, der in der Steckaufnahme 14 platziert ist und die eingesteckte Fluidleitung 2 umschließt.

Bei dem durch die Fluidleitung 2 hindurchgeführten Fluid kann es sich sowohl um ein gasförmiges Fluid, insbesondere Druckluft, als auch um ein hydraulisches Fluid handeln.

Die winkelmäßige Verteilung der Signalkontakte 26a, 26b innerhalb der Steckaufnahme 14 orientiert sich zweckmäßigerweise an derjenigen der zu kontaktierenden Signalleiter 7a, 7b. Beim Ausführungsbeispiel sind die Signalkontakte 26a, 26b sich diametral gegenüberliegend in der Steckaufnahme 14 platziert.

Die Signalkontakte 26a, 26b zeichnen sich durch eine besonders vorteilhafte Gestaltung ihrer Eindringpartie 27 aus. Diese ist von einer messerartigen Schneide 27a gebildet, deren Breite mindestens dem Durchmesser des zu kontaktierenden strangförmigen Signalleiters 7a, 7b entspricht. Beim Einstecken der Fluidleitung 2 dringen die messerartigen Schneiden vergleichbar einem Messer mit einer linienförmigen Schneidkante 37 voraus in den jeweils zugeordneten Signalleiter 7a, 7b ein und spalten diesen in einen radial außen liegenden äußeren Leiterzweig 38 und einen radial innen liegenden inneren Leiterzweig 39 auf.

Anders als bei einer als Spitze ausgebildeten Eindringpartie ermöglicht die nach Art einer messerartigen Schneide 27a gestaltete Bauform eine wesentlich höhere Treffsicherheit beim Einstecken der Fluidleitung 2, selbst wenn, wie beim Ausführungsbeispiel der Figuren 1 bis 3, keine besonderen Führungsmittel vorhanden sind, die ein bestimmtes drehwinkelorientiertes Einstecken der Fluidleitung begünstigen. Man hat die Möglichkeit, die Breite der Schneide 27a größer als den Durchmesser der Signalleiter 7a, 7b auszubilden, so dass grö-ßere Winkelbereiche zur Verfügung stehen, innerhalb denen stets eine sichere Kontaktierung gewährleistet ist.

Diese Vorteile ergeben sich auch in Verbindung mit Fluidleitungen, bei denen die Signalleiter 7a, 7b in einer Wandung mit konstanter Wandstärke eingebettet sind. Besonders vorteilhaft ist die geschilderte Bauform des Anschlussstückes 1 jedoch bei Fluidleitungen 5, bei denen die Signalleiter 7a, 7b, wie bei den Ausführungsbeispielen, mit ihrem gesamten oder mit zumindest einem Teil ihres Querschnittes in rippenartigen Wandabschnitte 6 verlaufen, die nach innen, in Richtung zum Fluidkanal 5, vorstehen.

Bei einer solchen Bauform kann die Breite der Schneide 27a problemlos relativ groß gewählt werden, ohne den Eindringwiderstand und folglich die zum Einstecken der Fluidleitung 2 aufzuwendende Kraft übermäßig zu erhöhen. Erreicht wird dies dadurch, dass die messerartigen Schneiden 27a so angeordnet und ausgebildet sind, dass sie beim Einstecken der Fluidleitung 2 lediglich im Bereich des rippenartigen Wandabschnittes 6 auf die Fluidleitung 2 treffen und folglich, soweit die Wandung 4 betroffen ist, nur den rippenartigen Wandabschnittes 6 durchschneiden. Diejenigen Abschnitte der Schneide 27a, die seitlich über den rippenartigen Wandabschnitt 6 hinausragen, liegen innerhalb des Fluidkanals 5 und stoßen dort auf keinen körperlichen Widerstand.

Zweckmäßigerweise ist die Breite der Schneide 27a so gewählt, dass sie zumindest der in der Umfangsrichtung der Wandung 4 gemessenen Breite des rippenartigen Wandabschnittes 6 entspricht, vorzugsweise jedoch größer ist. Auf diese Weise wird beim Eindringen der Schneide 27a nicht nur der Signalleiter 7a, 7b in zwei Leiterzweige 38, 39 aufgespaltet, sondern es wird zugleich ein radial innerhalb der Schneide 27a liegender innerer Abschnitt 42 des rippenartigen Wandabschnittes 6 entlang eines Teils seiner Länge vom restlichen Abschnitt der Wandung 4 abgetrennt.

Ist der Signalkontakt 26a, 26b so platziert, dass er unmittelbar im Bereich des kreisförmig konturierten Umfangsabschnittes des Fluidkanals 2 liegt, wird der rippenartige Wandabschnitt 6 komplett vom verbleibenden Wandabschnitt der Wandung 4 abgetrennt. In einem solchen Fall ist es erforderlich, dass der Querschnitt des zugeordneten Signalleiters 7a, 7b teils innerhalb des rippenartigen Wandabschnittes 6 und teils in dem außerhalb davon liegenden Wandabschnitt verläuft.

Bei den Ausführungsformen der Figuren 1 bis 3 ist die messerartige Schneide 27a und vorzugsweise der gesamte zugehörige Signalkontakt 26a, 26b bogenförmig gekrümmt, wenn man sie bzw. ihn von der Stirnseite her, also in der Richtung der Längsachse 17, betrachtet. Das Krümmungszentrum 43 fällt zweckmäßigerweise mit der Längsachse 17 der Steckaufnahme 14 zusammen. Es ist auf diese Weise besonders einfach möglich, eine Gestalt zu wählen, bei der die Schneiden 27a, 27b innerhalb des Durchmessers des Fluidkanals 5 liegen.

Bei der Ausführungsform gemäß Figuren 4 bis 6 ist die Schneide 27a ebenfalls bogenförmig gekrümmt. Hingegen verläuft sie bei der Bauform gemäß Figuren 7 und 8 geradlinig und insbesondere parallel zu einer an den Umfang der Steckaufnahme 14 angelegten Tangente.

Während die messerartige Schneide 27a bei den Ausführungsformen der Figuren 1 bis 3 sowie 7 und 8, bei radialer Blickrichtung - also rechtwinkelig zur Längsachse 17 gesehen -, einen zu der Längsachse 17 rechtwinkeligen, geradlinigen Verlauf hat, verläuft sie bei der Bauform gemäß Figuren 4 bis 6 konkav gekrümmt oder V-förmig. Diese letztgenannte-Gestaltung führt dazu, dass die Schneide 27a zwei sich in Umfangsrichtung gegenüberliegende Schneidenabschnitte 44a, 44b hat, deren Abstand zueinander ausgehend von einem näher zur Einstecköffnung 12 liegenden Bereich zu einem von der Einstecköffnung 12 weiter entfernten Wurzelbereich 45 hin abnimmt.

Wenn hier die Schneide 27a in den rippenartigen Wandabschnitt 6 eindringt, wird dieser zunächst mit den voreilenden Schneidenabschnitten 44a, 44b seitlich eingeschnitten, bis schließlich durch den Wurzelbereich 45 der komplette Einschnitt folgt. Bei dieser Bauform ist der Einschneidewiderstand besonders gering und folglich der Einsteckvorgang der Fluidleitung 2 besonders leichtgängig.

Die Bauform der Figuren 4 bis 6 ist im Übrigen, wie auch die Bauform der Figuren 7 und 8, mit Führungsmitteln 46 ausgestattet, die ein drehwinkelorientiertes Einstecken der Fluidleitung 2 unterstützen und dafür sorgen, dass die Fluidleitung 2 in einer vorbestimmten winkelmäßigen Ausrichtung aufgesteckt wird. Die Führungsmittel 46 sind bei der Bauform der Figuren 4 bis 6 von zwei einer jeweiligen Schneide 27a zugeordneten Führungsflügeln 47 gebildet, die in Richtung zur Einstecköffnung 12 hin über die messerartige Schneide 27a vorstehen und die zwischen sich einen sich zur Einstecköffnung 12 hin verbreiternden Führungsspalt 48 definieren. Dieser schließt sich unmittelbar an die Schneide 27a an, wobei seine Breite am vorderen Ende größer ist als diejenige des rippenartigen Wandabschnittes 6.

Eine anzuschließende Fluidleitung 2 wird so auf die Führungsflügel 47 aufgefädelt, dass die rippenartigen Wandabschnitte 6 in jeweils einem der Führungsspalte 48 zu liegen kommen. Mit zunehmender Einstecktiefe werden die rippenartigen Wandabschnitte 6 bei gleichzeitigem Verdrehen der Fluidleitung 2 so geführt, dass sie mit ihrer Stirnseite auf die Schneide 27a treffen.

Die Führungsflügel 47 sind zweckmäßigerweise einstückiger Bestandteil des jeweils zugeordneten Signalkontakts 26a, 26b.

Bei der Bauform gemäß Figuren 7 und 8 sind die Führungsmittel 46 von paarweise angeordneten Abstützflügeln 52 gebildet, die jeweils benachbart zu einer der messerartigen Schneiden 27a angeordnet sind. Sie liegen zweckmäßigerweise radial innerhalb der Schneiden 27a, ragen über diese allerdings in Richtung zur Einstecköffnung 12 hinaus. Sie definieren dabei jeweils einen im Querschnitt V-artig gestalteten Führungskanal 53, der längsseits nach radial außen hin offen ist.

Beim Einstecken einer Fluidleitung 2 wird diese winkelmäßig so positioniert, dass die rippenartigen Wandabschnitte 6 stirnseitig in jeweils einen der Führungskanäle 53 eintauchen. Beim weiteren Steckvorgang gleiten die rippenartigen Wandabschnitte 6 in den Führungskanälen 53 entlang, bis sie letztlich mit ihrer Stirnseite auf die im Aufsteckweg liegenden Schneiden 27a treffen.

Nachdem die Schneiden 27a in die rippenartigen Wandabschnitte 6 eingeschnitten haben und ein innerer Abschnitt 42 der rippenartigen Wandabschnitte 6 einschließlich eines inneren Leiterzweiges 39 abgespaltet wurde, wirken die Abstützflügel 52 unterstützend von innen her auf die abgespalteten Komponenten ein und drücken diese nach radial außen, so dass der innere Leiterzweig 39 in festem Kontakt mit der Schneide 27a bzw. dem sich anschließenden Abschnitt des Signalkontakts 26a, 26b gehalten wird.

Die Abstützflügel 52 sind zweckmäßigerweise federelastisch ausgebildet.

Allen Ausführungsbeispielen ist gemeinsam, dass die messerartige Schneide an ihrer Außenseite eine zur Schneidkante 37 hin schräg nach innen verlaufende Schneidenflanke 54 aufweist. Dadurch wird die flexible Fluidleitung 2 beim Aufstecken auf die Signalkontakte 26a, 26b radial aufgeweitet, mit der Folge, dass der äußere Leiterzweig 38 mit starker Pressung an den sich an die Schneide 27a anschließenden Bereichen des Signalkontakts 26a, 26b angedrückt wird.

Bei den Ausführungsbeispielen besteht der Vorteil, dass durch die gewählte Breite der Schneide 27a eine exakte winkelmäßige Ausrichtung der Fluidleitung 2 mit Bezug zum Anschlussstück 1 nicht erforderlich ist. Dadurch können bei der Herstellung größere Toleranzen gewählt werden, was eine kostengünstige Fertigung zulässt.

## Patentansprüche

1. Anschlussstück für eine einen Fluidkanal enthaltende Fluidleitung (2), in deren Wandung (4) mindestens ein zur Übertragung elektrischer Signale vorgesehener strangförmiger Signalleiter (7a, 7b) verläuft, mit einer eine Einstecköffnung (12) aufweisenden Steckaufnahme (14) zum Einstecken der Fluidleitung (2), mit einer Haltevorrichtung (16) zum Halten der eingesteckten Fluidleitung (2) und mit mindestens einem in der Steckaufnahnne (14) angeordneten und in Richtung der Einstecköffnung (12) ragenden Signalkontakt (26a, 26b), der beim Einstecken der Fluidleitung (2) unter Herstellung einer elektrischen Verbindung mit einer Eindringpartie (27) stirnseitig in einen Signalleiter (7a, 7b) eindringt, **dadurch gekennzeichnet, dass** die Eindringpartie (27) des mindestens einen Signalkontakts (26a, 26b) von einer messerartigen Schneide (27a) gebildet ist, deren Breite mindestens dem Durchmesser des zu kontaktierenden Signalleiters (7a, 7b) entspricht und die den Signalleiter (7a, 7b) beim stirnseitigen Eindringen in einen außen und einen innen liegenden Leiterzweig (38, 39) aufspaltet.

2. Anschlussstück nach Anspruch 1, **dadurch gekennzeichnet, dass** die messerartige Schneide (27a), in Stirnansicht gesehen, geradlinig ausgebildet ist..

3. Anschlussstück nach Anspruch 1, **dadurch gekennzeichnet, dass** die messerartige Schneide (27a), in Stirnansicht gesehen, bogenförmig gekrümmt ist, wobei das Krümmungszentrum (43) zweckmäßigerweise mit der Längsachse (17) der Steckaufnahme (14) zusammenfällt.

4. Anschlussstück nach einem der Ansprüche 1 bis 3, **dadurch gekennzeichnet, dass** die messerartige Schneide (27a) an der Außenseite eine zur Schneidkante (37) hin schräg nach innen verlaufende Schneidenflanke (54) aufweist.

5. Anschlussstück nach einem der Ansprüche 1 bis 4, **dadurch gekennzeichnet, dass** die messerartige Schneide (27a), bei radialer Blickrichtung gesehen, einen zur Längsachse (17) der Steckaufnahme (14) rechtwinkeligen, geradlinigen Verlauf hat.

6. Anschlussstück nach einem der Ansprüche 1 bis 5, **dadurch gekennzeichnet, dass** die messerartige Schneide (27a), bei radialer Blickrichtung, einen konkav gekrümmten und/oder V-artig eingebuchteten Verlauf hat.

7. Anschlussstück nach einem der Ansprüche 1 bis 6, **dadurch gekennzeichnet, dass** der mindestens eine Signalkontakt (26a, 26b) zwei auf einander entgegengesetzten Seiten in Richtung zur Einstecköffnung (12) über die messerartige Schneide (27a) vorstehende Führungsflügel (47) aufweist, die einen sich zur Einstecköffnung (12) hin verbreiternden Führungsspalt (48) für einen rippenartigen Wandabschnitt (6) der Fluidleitung (2) definieren.

8. Anschlussstück nach einem der Ansprüche 1 bis 7, **dadurch gekennzeichnet, dass** dem mindestens einen Signalkontakt (26a, 26b) mindestens ein benachbart zu der messerartigen Schneide (27a) angeordneter Abstützflügel (52) zugeordnet ist, der im eingesteckten Zustand der Fluidleitung (2) den radial innen liegenden inneren Leiterzweig (39) abstützend untergreift und gegen den Signalkontakt (26a, 26b) drückt.

9. Anschlussstück nach Anspruch 8, **dadurch gekennzeichnet, dass** dem mindestens einen Signalkontakt (26a, 26b) zwei längsseits nebeneinander angeordnete Abstützflügel (52) zugeordnet sind, die einen zur Aufnahme eines rippenartigen Wandabschnitts (6) der Fluidleitung (2) vorgesehenen Führungskanal (53) definieren.

10. Anschlussstück nach einem der Ansprüche 1 bis 9, **dadurch gekennzeichnet, dass** die Breite der messerartigen Schneide (27a) größer ist als der Durchmesser des zu kontaktierenden Signalleiters (7a, 7b), sodass die Schneide (27a) beim Einstecken der Fluidleitung (2) auch in die den Signalleiter (7a, 7b) umgebenden Wandabschnitte (6) der Fluidleitung (2) einschneidet.

11. Anschlussstück nach einem der Ansprüche 1 bis 10, ausgebildet zum Anschließen einer Fluidleitung (2), deren mindestens ein elektrischer Signalleiter (7a, 7b) mit wenigstens einem Teil seines Querschnittes in einem gegenüber den in Umfangsrichtung benachbarten Wandbereichen nach radial innen vorstehenden rippenartigen Wandabschnitt (6) der Wandung (4) verläuft.

12. Anschlussstück nach Anspruch 11, **dadurch gekennzeichnet, dass** die messerartige Schneide (27a) so angeordnet und ausgebildet ist, dass sie beim Einstecken der Fluidleitung (2) in den rippenartigen Wandabschnitt (6) einschneidet und diesen zumindest partiell entlang eines Teils seiner Länge vom restlichen Wandabschnitt abtrennt.

13. Anschlussstück nach einem der Ansprüche 1 bis 12, **gekennzeichnet durch** wenigstens zwei in Umfangsrichtung beabstandet zueinander angeordnete Signalkontakte (26a, 26b), die sich insbesondere diametral gegenüberliegen.

14. Anschlussstück nach einem der Ansprüche 1 bis 13, **dadurch gekennzeichnet, dass** der mindestens eine Signalkontakt (26a, 26b) in Richtung der Längsachse (17) der Steckaufnahme (14) verschiebbar gelagert ist und mit Federmitteln (33) kooperiert, die ihn in Richtung der Einstecköffnung (12) beaufschlagen können.

15. Anschlussstück nach einem der Ansprüche 1 bis 14, **dadurch gekennzeichnet, dass** der mindestens eine Signalkontakt (26a, 26b) an einem Kontraktträger (28) fixiert ist und zusammen mit diesem einen in das Gehäuse (13) des Anschlussstückes (1) eingesetzten Einsatz (32) bildet.

16. Anschlussstück nach einem der Ansprüche 1 bis 15, **dadurch gekennzeichnet, dass** die Fluidleitung (2) schlauchförmig ausgebildet ist.

17. Anschlussstück nach einem der Ansprüche 1 bis 16, **gekennzeichnet durch** Führungsmittel (46) zur Unterstützung eines drehwinkelorientierten Einsteckens der Fluidleitung (2).

## Claims

1. Connection piece for a fluid line (2) containing a fluid passage, in the wall (4) of which runs at least one strand-like signal conductor (7a, 7b) provided for the transmission of electrical signals, with a plug receptacle (14) with an insertion hole (12) for insertion of the fluid line (2), with a holding fixture (16) to hold the inserted fluid line (2), and with at least one signal contact (26a, 26b) located in the plug receptacle (14) and extending towards the insertion hole (12) and which, on insertion of the fluid line (2), penetrates the end of a signal conductor (7a, 7b) with a penetrating section (27) to create an electrical connection, **characterised in that** the penetrating section (27) of the signal contact or contacts (26a, 26b) is formed by a blade-like cutter (27a) with a width corresponding to at least the diameter of the signal conductor (7a, 7b) to be contacted, and which splits the signal conductor (7a, 7b) on penetration of its end into an outer and an inner conductor branch (38, 39).

2. Connection piece according to claim 1 **characterised in that**, in an end view, the blade-like cutter (27a) forms a straight line.

3. Connection piece according to claim 1 **characterised in that**, in an end view, the blade-like cutter (27a) is curved, with the centre of curvature (43) expediently coinciding with the longitudinal axis (17) of the plug receptacle (14).

4. Connection piece according to any of claims I to 3, **characterised in that** the blade-like cutter (27a) has on the outside a cutter side (54) running inwards at an angle to the cutting edge (37).

5. Connection piece according to any of claims 1 to 4, **characterised in that** the blade-like cutter (27a), viewed in the radial direction, runs straight at right-angles to the longitudinal axis (17) of the plug receptacle (14).

6. Connection piece according to any of claims 1 to 5, **characterised in that** the blade-like cutter (27a), viewed in the radial direction, has a concave curved and/or a V-shaped indented shape.

7. Connection piece according to any of claims 1 to 6, **characterised in that** the signal contact or contacts (26a, 26b) has or have on opposite sides two guide vanes (47) extending beyond the blade-like cutter (27a) towards the insertion hole (12) and defining a guiding gap (48), widening towards the insertion hole (12), for a rib-like wall section (6) of the fluid line (2).

8. Connection piece according to any of claims 1 to 7, **characterised in that** the signal contact or contacts (26a, 26b) is or are assigned at least one support vane (52) fitted adjacent to the blade-like cutter (27a) and which, in the inserted state of the fluid line (2), engages the radially inner conductor branch (39) with support from below, and presses against the signal contact (26a, 26b).

9. Connection piece according to claim 8, **characterised in that** the signal contact or contacts (26a, 26b) is or are assigned two support vanes (52) located alongside one another and defining a guide passage (53) provided to hold a rib-like wall section (6) of the fluid line (2).

10. Connection piece according to any of claims 1 to 9, **characterised in that** the width of the blade-like cutter (27a) is greater than the diameter of the signal conductor (7a, 7b) to be contacted so that the cutter (27a), on insertion of the fluid line (2), also cuts into the wall sections (6) of the fluid line (2) surrounding the signal conductor (7a, 7b).

11. Connection piece according to any of claims 1 to 10, designed for the connection of a fluid line (2), the electrical signal conductor or conductors (7a, 7b) of which run with at least part of their cross-section in a rib-like wall section (6) of the wall (4) extending radially inwards as compared with the adjacent wall sections in the circumferential direction.

12. Connection piece according to claim 11, **characterised in that** the blade-like cutter (27a) is so mounted and designed that, on insertion of the fluid line (2), it cuts into the rib-like wall section (6), separating the latter at least partly from the rest of the wall section along part of its length.

13. Connection piece according to any of claims 1 to 12, **characterised by** at least two signal contacts (26a, 26b) spaced apart in the circumferential direction and in particular diametrically opposite one another.

14. Connection piece according to any of claims 1 to 13, **characterised in that** the signal contact or contacts (26a, 26b) is or are mounted with the facility to slide in the direction of the longitudinal axis (17) of the plug receptacle (14), and cooperate(s) with spring means (33) which are able to bias it or them towards the insertion hole (12).

15. Connection piece according to any of claims 1 to 14, **characterised in that** the signal contact or contacts (26a, 26b) is or are fixed to a contact support (28) and, together with the latter, forms or form an insert (32) inserted in the housing (13) of the connection piece (1).

16. Connection piece according to any of claims I to 15, **characterised in that** the fluid line (2) is hose-like in shape.

17. Connection piece according to any of claims 1 to 16, **characterised by** guide means (46) to assist rotation-angle-oriented insertion of the fluid line (2).

## Revendications

1. Raccord destiné à une conduite fluidique (2) contenant un canal de fluide, dans la paroi (4) de laquelle s'étend au moins un conducteur de signaux (7a, 7b) en forme de cordon prévu pour transmettre des signaux électriques, avec un logement de fiche (14) présentant une ouverture d'enfichage (12) pour enficher la conduite fluidique (2), avec un dispositif de maintien (16) pour tenir la conduite fluidique (2) enfichée et avec au moins un contact de signal (26a, 26b) placé dans le logement de fiche (14) et dépassant en direction de l'ouverture d'enfichage (12), contact qui, lors de l'enfichage de la conduite fluidique (2), pénètre côté frontal dans un conducteur de signaux (7a, 7b) en établissant une liaison électrique avec une partie de pénétration (27), **caractérisé en ce que** la partie de pénétration (27) du contact de signal (26a, 26b) au nombre d'au moins un est formée par une lame (27a) de type couteau, dont la largeur correspond au moins au diamètre du conducteur de signaux (7a, 7b) à mettre en contact et qui, lors de la pénétration côté frontal, divise le conducteur de signaux (7a, 7b) en une branche de conducteur extérieure et une branche de conducteur intérieure (38, 39).

2. Raccord selon la revendication 1, **caractérisé en ce que** la lame (27a) de type couteau est réalisée rectiligne en vue de face.

3. Raccord selon la revendication 1, **caractérisé en ce que** la lame (27a) de type couteau est courbée en arc en vue de face, le centre de courbure (43) coïncidant de manière avantageuse avec l'axe longitudinal (17) du logement de fiche (14).

4. Raccord selon l'une des revendications 1 à 3, **caractérisé en ce que** la lame (27a) de type couteau présente sur la face extérieure un flanc de lame (54) s'étendant en oblique vers l'intérieur en direction du bord tranchant (37).

5. Raccord selon l'une des revendications 1 à 4, **caractérisé en ce que** la lame (27a) de type couteau présente en regardant radialement un profil rectiligne à angle droit par rapport à l'axe longitudinal (17) du logement de fiche (14).

6. Raccord selon l'une des revendications 1 à 5, **caractérisé en ce que** la lame (27a) de type couteau présente en regardant radialement un profil à courbure concave et/ou renfoncé à la manière d'un V.

7. Raccord selon l'une des revendications 1 à 6, **caractérisé en ce que** le contact de signal (26a, 26b) au nombre d'au moins un présente deux ailes de guidage (47) faisant saillie sur des côtés opposés en direction de l'ouverture d'enfichage (12) par rapport à la lame (27a) de type couteau, ailes qui définissent une fente de guidage (48) s'élargissant en direction de l'ouverture d'enfichage (12) pour une section de paroi (6) de type nervure de la conduite fluidique (2).

8. Raccord selon l'une des revendications 1 à 7, **caractérisé en ce qu'**au contact de signal (26a, 26b) au nombre d'au moins un est associée au moins une aile de soutien (52) placée au voisinage de la lame (27a) de type couteau, aile qui saisit la branche de conducteur intérieure (39) située à l'intérieur radialement en la soutenant dans l'état enfiché de la conduite fluidique (2) et qui la presse contre le contact de signal (26a, 26b).

9. Raccord selon la revendication 8, **caractérisé en ce qu'**au contact de signal (26a, 26b) au nombre d'au moins un sont associées deux ailes de soutien (52) placées longitudinalement l'une à côté de l'autre, qui définissent un canal de guidage (53) prévu pour recevoir une section de paroi (6) de type nervure de la conduite fluidique (2).

10. Raccord selon l'une des revendications 1 à 9, **caractérisé en ce que** la largeur de la lame (27a) de type couteau est supérieure au diamètre du conducteur de signaux (7a, 7b) à mettre en contact de sorte que, lors de l'enfichage de la conduite fluidique (2), la lame (27a) pénètre également dans les sections de paroi (6) de la conduite fluidique (2) entourant le conducteur de signaux (7a, 7b).

11. Raccord selon l'une des revendications 1 à 10, conformé pour raccorder une conduite de fluide (2) dont le conducteur électrique de signaux (7a, 7b) au nombre d'au moins un s'étend avec au moins une partie de sa section dans une section (6) de la paroi (4) de type nervure faisant saillie radialement vers l'intérieur par rapport aux parties de paroi voisines dans la direction circonférentielle.

12. Raccord selon la revendication 11, **caractérisé en ce que** la lame (27a) de type couteau est disposée et conformée de telle manière que, lors de l'enfichage de la conduite fluidique (2), elle pénètre dans la section de paroi (6) de type nervure et sépare celle-ci au moins partiellement, sur une partie de sa longueur, de la section de paroi restante.

13. Raccord selon l'une des revendications 1 à 12, **caractérisé par** au moins deux contacts de signaux (26a, 26b) espacés l'un de l'autre dans la direction circonférentielle, qui se font face en particulier diamétralement.

14. Raccord selon l'une des revendications 1 à 12, **caractérisé en ce que** le contact de signal (26a, 26b) au nombre d'au moins un est monté mobile dans la direction de l'axe longitudinal (17) du logement d'enfichage (14) et coopère avec des moyens à ressort (33) qui peuvent le solliciter en direction de l'ouverture d'enfichage (12).

15. Raccord selon l'une des revendications 1 à 14, **caractérisé en ce que** le contact de signal (26a, 26b) au nombre d'au moins un est fixé sur un support de contact (28) et forme avec celui-ci un insert (32) inséré dans le boîtier (13) du raccord (1).

16. Raccord selon l'une des revendications 1 à 15, **caractérisé en ce que** la conduite de fluide (2) est réalisée sous forme de tuyau.

17. Raccord selon l'une des revendications 1 à 16, **caractérisé par** des moyens de guidage (46) pour assister un enfichage de la conduite fluidique (2) selon une certaine orientation angulaire.
